Europäisches Patentamt

European Patent Office

Office européen des brevets

(11) Veröffentlichungsnummer: **0 412 463 A2**

# (12) EUROPÄISCHE PATENTANMELDUNG

(21) Anmeldenummer: 90115002.9

(51) Int. Cl.5: **B60T 7/12**

(22) Anmeldetag: 04.08.90

(30) Priorität: 08.08.89 DE 3926135

(43) Veröffentlichungstag der Anmeldung:
13.02.91 Patentblatt 91/07

(84) Benannte Vertragsstaaten:
DE FR GB IT SE

(71) Anmelder: HOECHST AKTIENGESELLSCHAFT
Postfach 80 03 20
D-6230 Frankfurt am Main 80(DE)

(72) Erfinder: Rewitzer, Siegfried
Veilchenhang 16
D-8420 Ihrlerstein(DE)

(54) Sicherheitseinrichtung für ein fahrerloses Transportfahrzeug.

(57) Beschrieben wird eine Sicherheitseinrichtung für ein fahrerloses Transportfahrzeug. Die Sicherheitseinrichtung weist zwei elastisch aufgehängte Schaltleisten auf, die in einer Lastabsicherungsstellung je einer vertikal verlaufenden Kante der Last im rückwärtigen Bereich des Fahrzeuges zugeordnet sind und bei unbeabsichtigter Berührung eines Hindernisses ein Schaltsignal zum Anhalten des Transportfahrzeuges auslösen. Bei einem Ausführungsbeispiel sind die beiden Schaltleisten aus der Lastabsicherungsstellung in eine zurückgezogene Stellung verfahrbar, in der sie das Auf- und Abladen der Last nicht behindern. Bei einem anderen Ausführungsbeispiel sind die Schaltleisten an der Last selbst angebracht. In diesem Fall liegen die Schaltleisten bei auf der Transportfläche abgesetzter Last an einem am Fahrzeug vorgesehenen Bumper an, und zwar derart, daß der Bumper bei Auftreffen der Schaltleiste auf ein Hindernis das Schaltsignal erzeugt.

Fig. 1

EP 0 412 463 A2

## SICHERHEITSEINRICHTUNG FÜR EIN FAHRERLOSES TRANSPORTFAHRZEUG

Die Erfindung betrifft eine Sicherheitseinrichtung für ein fahrerloses Transportfahrzeug mit einer offenen Transportfläche zur Aufnahme einer Last.

Bei fahrerlosen Transportfahrzeugen, beispielsweise Gabelhubwagen oder ähnlichen Fahrzeugen, soll das Fahrzeug zu feststehenden Hindernissen einen Sicherheitsabstand von mindestens 500 mm einhalten. Dies ist jedoch nicht immer möglich. Herkömmliche Fahrzeuge sind daher häufig mit einer Kontakteinrichtung beispielsweise in Form eines Bumpers (einer Stoßstange) versehen, die bei Auftreffen auf ein Hindernis ein Schaltsignal zum Anhalten des Fahrzeuges erzeugt. Durch diese Kontakteinrichtungen sind die herkömmlichen Fahrzeuge jedoch nur im Bereich der Lastaufnahmemittel (Lastaufnahmevorrichtung) abgesichert, nicht aber im Bereich der aufzunehmenden Last. Wenn daher das Transportfahrzeug bei Rückwärtsfahrt mit Last etwa durch enge Gassen (z.B. in Regale oder an abgestellten Lasten vorbei) fährt, besteht die Gefahr von Personenunfällen oder auch Sachschädendurch Quetschungen.

Der Erfindung liegt die Aufgabe zugrunde, eine Sicherheitseinrichtung für ein fahrerloses Transportfahrzeug mit einer offenen Transportfläche zur Aufnahme einer Last zu schaffen, die bei Auftreffen auf ein Hindernis im Bereich der auf dem Fahrzeug ruhenden Last ein Schaltsignal erzeugt.

Zur Lösung dieser Aufgabe weist die Sicherheitseinrichtung, die bei einer unbeabsichtigten Berührung eines Hindernisses ein Schaltsignal zum Anhalten des Fahrzeuges abgibt, mindestens eine elastisch aufgehängte Schaltleiste auf, die in eine Lastabsicherungsstellung vertikal verlaufend sich im wesentlichen über die Höhe der Last erstreckt und einer im rückwärtigen Bereich des Fahrzeuges liegenden Kante der Last zugeordnet ist.

Hat die Last einen rechteckigen Grundriß mit zwei rückwärtigen Eckkanten, so sind vorzugsweise zwei Schaltleisten vorgesehen, die je einer der rückwärtigen Kanten der Last zugeordnet sind.

Gemäß einer Ausführungsform ist die bzw. jede Schaltleiste zwischen der Lastabsicherungsstellung und einer zurückgezogenen Stellung im vorderen Bereich des Fahrzeuges bewegbar, wobei sich die Bewegungsbahn der Schaltleiste bzw. Schaltleisten seitlich neben der auf der Transportfläche ruhenden Last befindet.

In der Lastabsicherungsstellung üben daher die Schaltleisten ihre Funktion zur Absicherung der Kanten der Last aus, während sie in der zurückgezogenen Stellung ein Auf- und Abladen der Last nicht behindern und gegebenenfalls zur Absicherung von Fahrzeugkanten benutzt werden. Insbesondere kann bei zurückgezogenen Schaltleisten das Transportfahrzeug mit seiner Transportfläche zum Auf- und Abladen unter der Last verfahren werden. Wenn die Last angehoben ist, können die Schaltleisten zwischen ihrer Lastabsicherungsstellung und ihrer zurückgezogenen Stellung verstellt werden. Bei Vorwärtsfahrt des Fahrzeuges sind die Schaltleisten normalerweise funktionslos.

Gemäß einer anderen Ausführungsform der Erfindung ist die bzw. jede Schaltleiste an der Last angebracht. Wenn an der Rückseite des Fahrzeuges ein elastisch aufgehängter Bumper zum Erzeugen eines Schaltsignales vorgesehen ist, ist in weiterer Ausgestaltung der Erfindung vorgesehen, daß die bzw. jede Schaltleiste einen seitlich abstehenden Abschnitt aufweist, der bei auf der Transportfläche ruhender Last an dem Bumper so anliegt, daß bei Auftreffen der Schaltleiste auf ein Hindernis das Schaltsignal von dem Bumper erzeugt wird.

Bei dieser Ausführungsform ist ein Verfahren der Schaltleisten nicht erforderlich, und auch ein gesondarter Schaltkreis zum Erzeugen des Schaltkreises erübrigt sich.

Vorteilhafte Ausgestaltungen der Erfindung gehen aus den Unteransprüchen hervor.

Anhand der Zeichnungen werden Ausführungsbeispiele der Erfindung erläutert. Es zeigt:

Figur 1 eine Seitenansicht eines Transportfahrzeuges mit einer Sicherheitseinrichtung, deren Schaltleisten sich in der Lastabsicherungsstellung befinden;

Figur 2 eine der Figur 1 entsprechende Ansicht, bei der sich jedoch die Schaltleisten in ihrer zurückgezogenen Stellung befinden;

Figur 3 eine Rückansicht des Transportfahrzeuges der Figuren 1 und 2;

Figur 4 eine Draufsicht auf das Transportfahrzeug der Figuren 1 und 2;

Figur 5 eine der Figur 2 entsprechende Ansicht des Transportfahrzeuges mit einer abgewandelten Führung der Schaltleisten;

Figur 6 ein Detail des Fahrzeuges nach Figur 5;

Figur 7 eine der Fiqur 1 entsprechende Ansicht eines Transportfahrzeuges mit einer abgewandelten Einrichtung zum Verfahren der Schaltleisten;

Figur 8 eine Draufsicht auf das Transportfahrzeug der Figur 7 von oben;

Figur 9 eine der Figur 1 entsprechende Ansicht eines Transportfahrzeuges mit einer anderen Ausführungsform der Sicherheitseinrichtung;

Figur 10 ein Detail der Sicherheitseinrichtung in Figur 9.

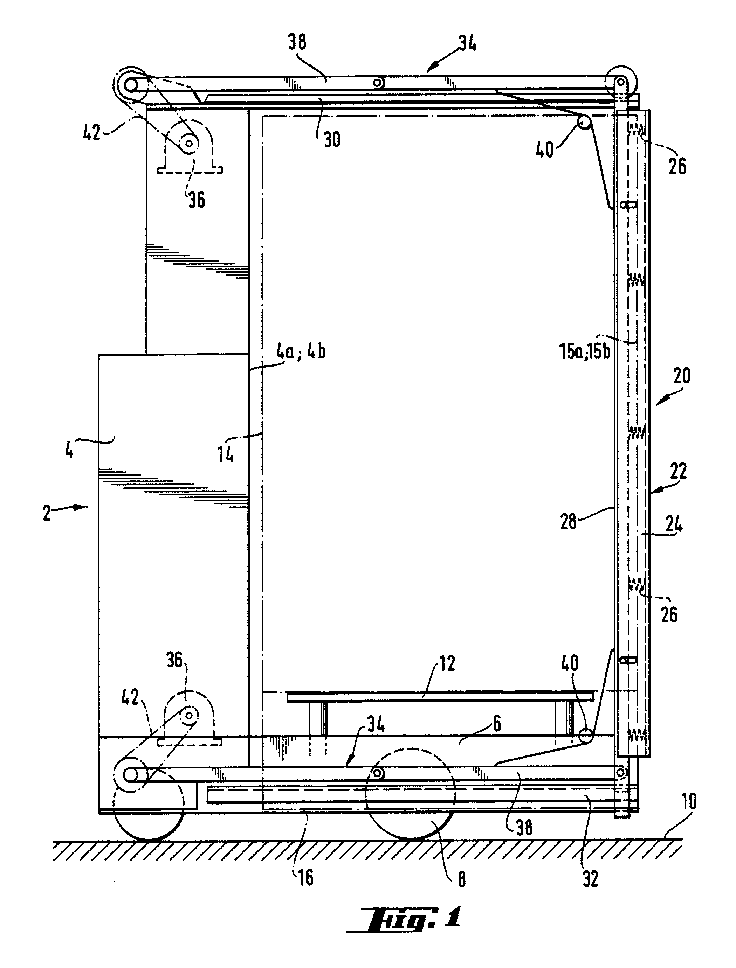

Die Figuren 1 bis 4 zeigen ein Transportfahrzeug mit einem Fahrzeugrahmen, der einen Aufsatz 4 zur Aufnahme von Antrieb und Steuereinrichtungen sowie eine offene Transportfläche 6 aufweist und mit Rädern 8 auf dem Boden 10 läuft. Die Transportfläche 6 besitzt im dargestellten Ausführungsbeispiel eine heb- und senkbare Plattform 12 (Figur 3) zur Aufnahme einer Last 14.

Die Last, die eine Kanne für Spinnfasern sein kann, hat, wie dargestellt, im wesentlichen die Form eines Quaders mit zwei rückwärtigen Eckkanten 15a und 15b und ist auf ihren beiden Seiten mit je einem nach unten vorstehenden Fuß 16 versehen.

Zum Beladen fährt das Transportfahrzeug 2 in Rückwärtsrichtung mit seiner Transportfläche 6 zwischen die Füße 16, worauf die Last 14 von der Plattform 12 angehoben werden kann. Der Abladevorgang läuft in der umgekehrten Reihenfolge ab.

Das Transportfahrzeug 2 ist mit einer Sicherheitseinrichtung 20 zum Absichern der rückwärtigen Eckkanten 15a, 15b der Last 14 versehen. Die Sicherheitseinrichtung 20 weist zwei Schaltleisten 22 auf, die vertikal verlaufen und sich im wesentlichen über die gesamte Höhe der Last 14 an den Ecken erstrecken.

Die beiden Schaltleisten 22 sind zwischen einer Lastabsicherungsstellung (Figur 1) und einer zurückgezogenen Stellung (Figur 2) verfahrbar, wobei sie in der Lastabsicherungsstellung den rückwärigen Eckkanten 15a, 15b der Last 14 und in der zurückgezogenen Stellung den rückwärtigen Eckkanten des Aufsatzes 4 benachbart sind.

Jede Schaltleiste 22 weist eine Kontaktleiste 24 auf, die über Federn 26 an einer Tragleiste 28 aufgehängt ist. Wird die Kontaktleiste 24 - z.B. bei Auftreffen auf ein Hindernis -entgegen der Kraft der Federn 26 in Richtung auf die Tragleiste 28 verschoben, so wird über einen elektrischen Kreis ein Schaltsignal erzeugt, das zum Anhalten des Transportfahrzeuges benutzt wird.

Die Schaltleisten 22 sind in einer oberen Führung 30 und einer unteren Führung 32 so geführt, daß sie sich parallel zu sich selbst und zueinander bewegen. Hierbei verläuft ihre Bewegungsbahn seitlich neben der auf der Transportfläche ruhenden Last 14. Die Tragleisten 28 untergreifen hierbei die beiden Füße 16 der Last 14 (Figur 3), so daß die Schaltleisten 22 in ihre Lastabsicherungsstellung erst verfahren werden können, wenn die Last 14 angehoben ist.

Die Schaltleisten 22 sind über eine Kraftübertragungseinrichtung 34 mit einem Antrieb 36 (Figur 4) in Form eines Motors mit Untersetzungsgetriebe oder eines Linearmotors verbunden. Bei dem Ausführungsbeispiel der Figuren 1 bis 4 besteht die Kraftübertragungseinrichtung 34 aus je einem am oberen und unteren Ende der Schaltleiste 22 angelenkten zweiarmigen Hebelgestänge 38, das von Federn 40 vorgespannt wird und über einen schematisch angedeuteten) Kettentrieb 42 mit dem Motor 36 verbunden ist.

Die Betriebsweise der beschriebenen Sicherheitseinrichtung 20 dürfte bereits aus der vorstehenden Beschreibung ersichtlich sein. Im lastfreien Zustand befinden sich die Schaltleisten 22 in ihrer zurückgezogenen Stellung (Figur 2). Bei Rückwärtsfahrt des Fahrzeuges dienen sie hierbei als Absicherung der rückwärtigen Eckkanten 4a, 4b des Aufsatzes 4.

Zum Aufladen der Last 14 wird, wie bereits erwähnt, das Transportfahrzeug 2 in Rückwärtsrichtung mit seiner Transportfläche 6 unter die Last 14 gefahren, die dann von der Plattform 12 angehoben wird. Hierauf werden dia in den Führungen 30 und 32 laufenden Schaltleisten 22 von dem Antrieb 36 über die Kraftübertragungseinrichtung 34 in ihre Lastabsicherungssellung (Figur 1) verfahren, in der sie die rückwärtigen Eckkanten 15a, 15b der Last 14 absichern. Die Endstellungen der Schaltleisten 22 werden durch (nicht gezeigte) Endschalter überwacht.

Stößt bei Rückwärtsfahrt des Transportfahrzeules 2-etwa durch eine enge Gasse - eine der Schaltleisten 22 auf ein Hindernis, so löst dies ein elektrisches Schaltsignal aus, das zum sofortigen Anhalten des Fahrzeuges benutzt wird. Die Steuerkreise und Abremseinrichtungen bilden nicht Gegenstand der vorliegenden Erfindung und sind daher nicht gezeigt.

Ehe die Last 14 wieder abgeladen wird, werden die Schaltleisten 22 in ihre zurückgezogene Stellung zurückbewegt.

Bei Vorwärtsfahrt des Fahrzeuges 2 sind die Schaltleisten 22 normalerweise funktionslos.

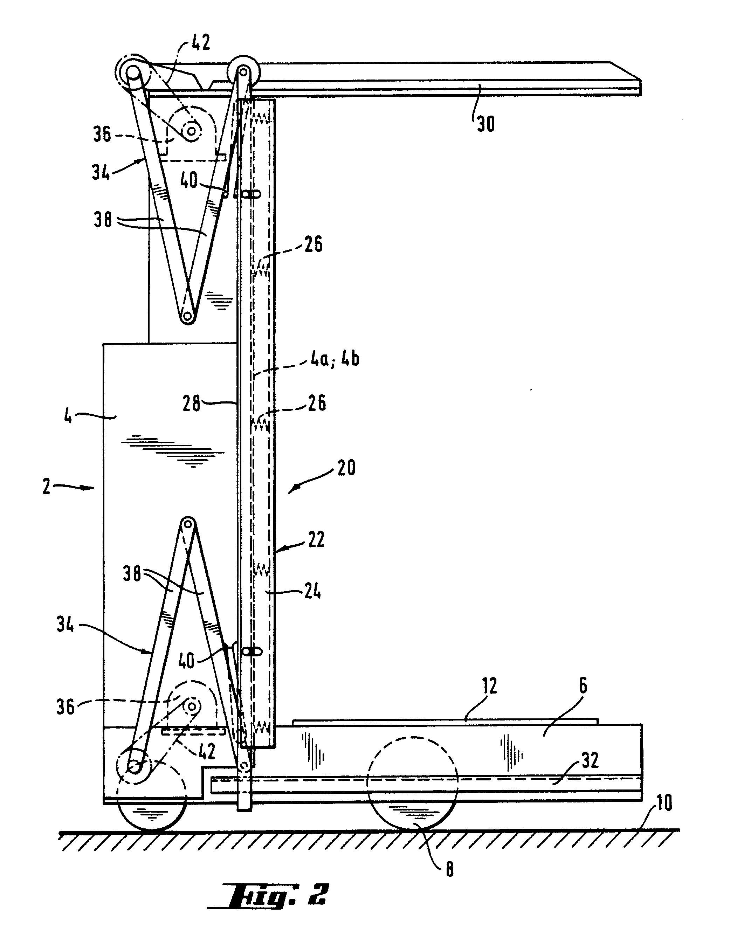

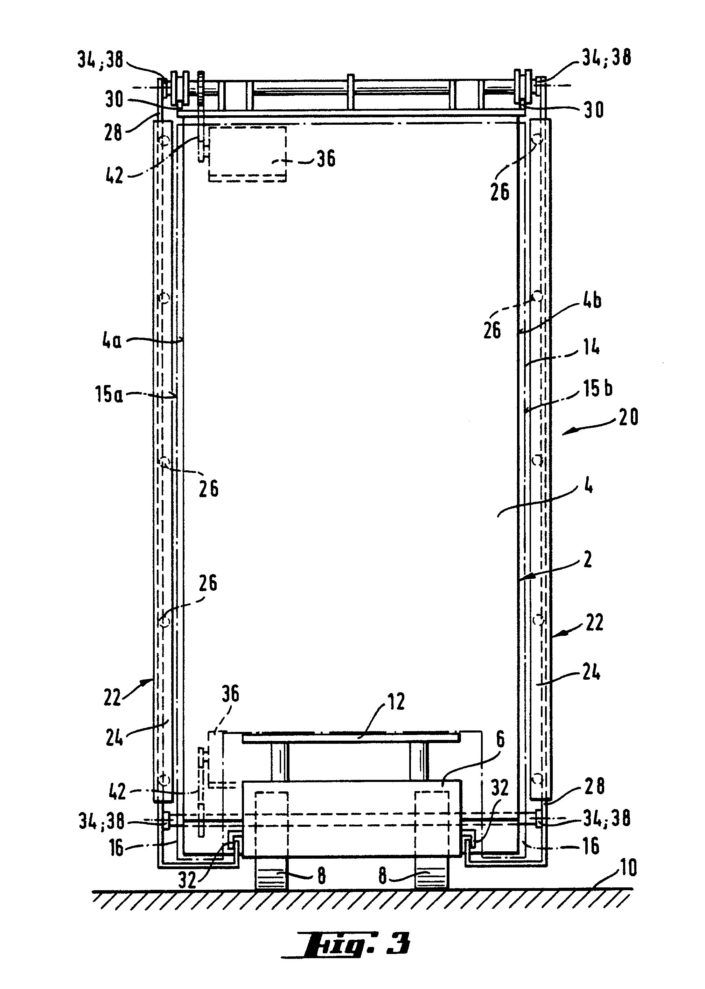

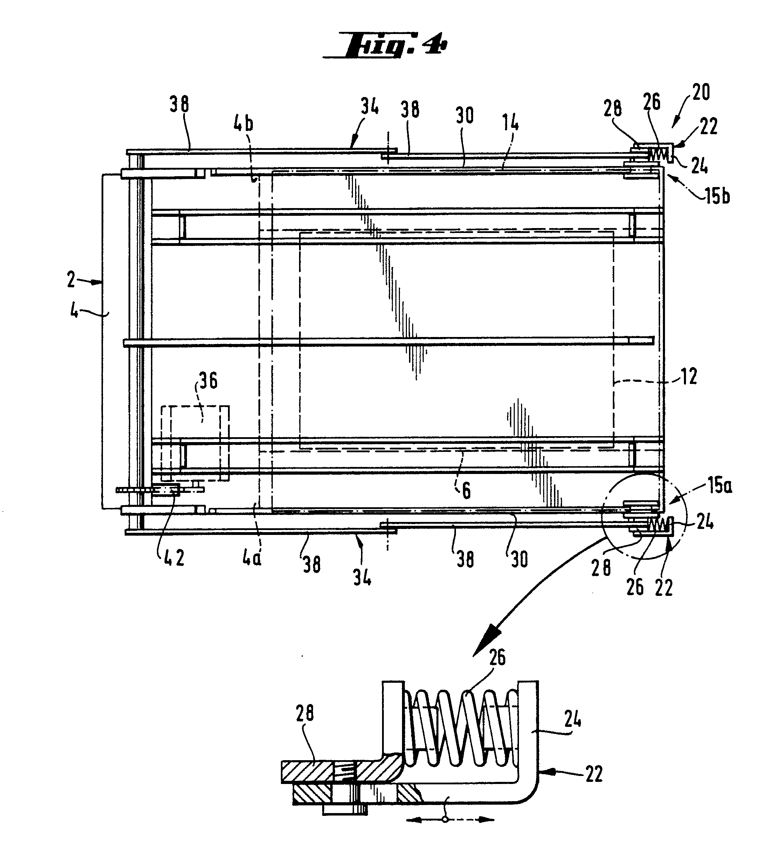

Während bei dem Ausführungsbeispiel der Figuren 1 bis 4 die obere Führung 30 und die untere Führung 32 am Fahrzeug fest angebracht sind, trifft dies bei dem Ausführungsbeispiel der Figuren 5, 6 nur für die obere Führung 30 zu, während die untere Führung 32' an der Last 14 angebracht ist. Die untere Führung 32' kann beispielsweise aus einfachen Führungsschienen bestehen, die bei aufgesetzter Last entsprechende Führungsabschnitte am Fahrzeug verlängern. Das Hebelgestänge 38 ist über einen etwas abgewandelten Kettenzug 42' mit dem Antrieb verbunden.

Im übrigen entspricht das Ausführungsbeispiel der Figuren 5, 6 praktisch dem der Figuren 1 bis 4.

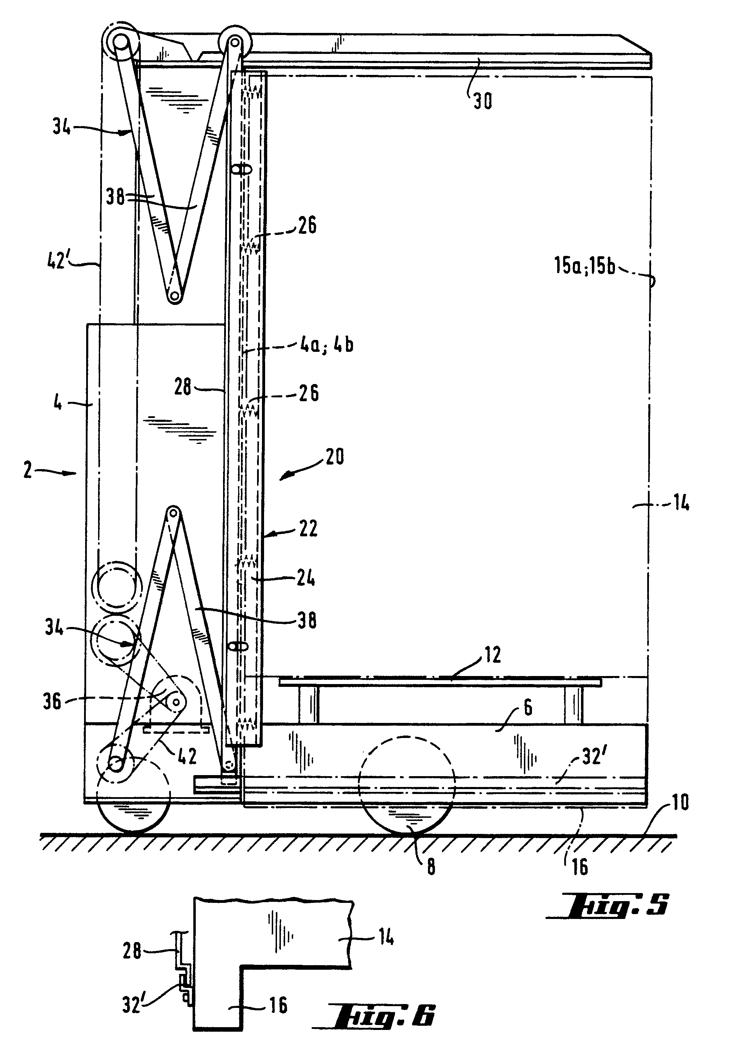

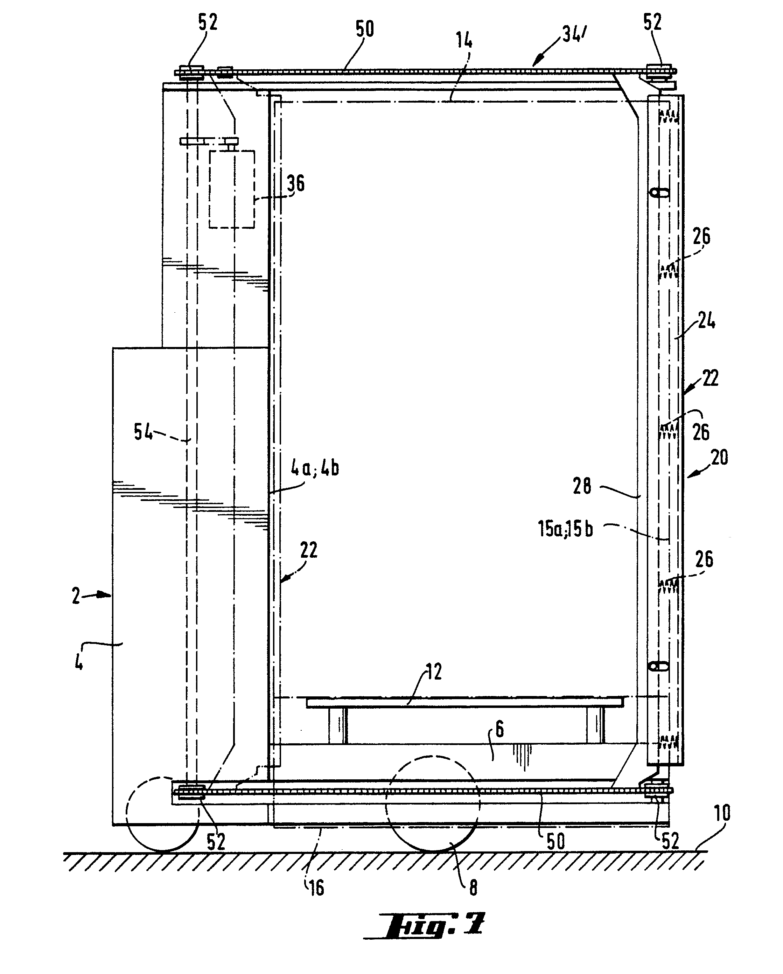

Das in den Figuren 7 und 8 gezeigte Ausführungsbeispiel entspricht weitgehend dem Ausführungsbeispiel der Figuren 1 bis 4 und unterscheidet sich hiervon im wesentlichen nur dadurch, daß als Kraftübertragungseinrichtung 34' ein Seilzug bzw. Kettenzug dient.

Der Seilzug bzw. Kettenzug besteht im dargestellten Ausführungsbeispiel aus zwei endlosen Seilen bzw. Ketten 50, die an der Ober- und Unterseite des Fahrzeuges jeweils um vier Rollen 52 geführt sind. Jedes der Seile bzw. Ketten 50 ist mit einer Schaltleiste 22 verbunden und wird über Wellen 54 von einem gemeinsamen Antrieb 36 angetrieben.

Der Vorteil dieser Lösung besteht darin, daß der Seil- bzw. Kettenzug vollständig unterhalb bzw. oberhalb der Transportfläche 6 des Fahrzeuges liegt und ein eine Verletzungsgefahr darstellendes sperriges Gestänge oder dergleichen nicht erforderlich ist.

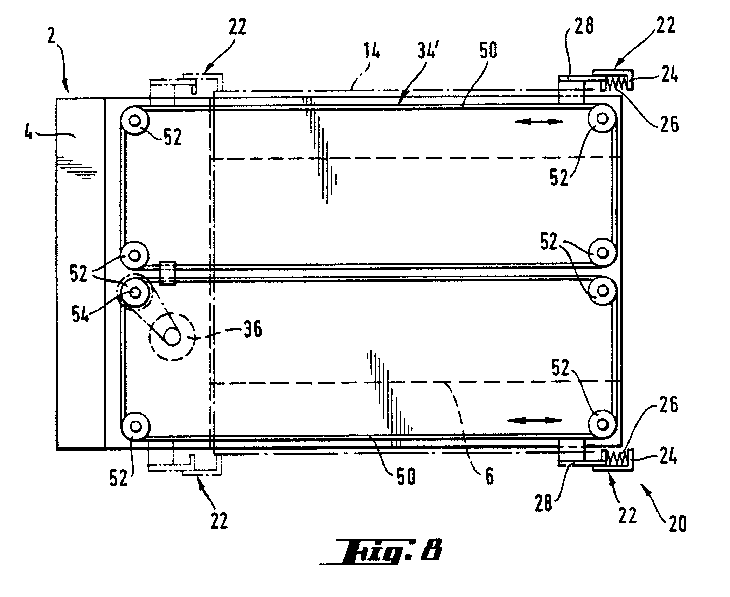

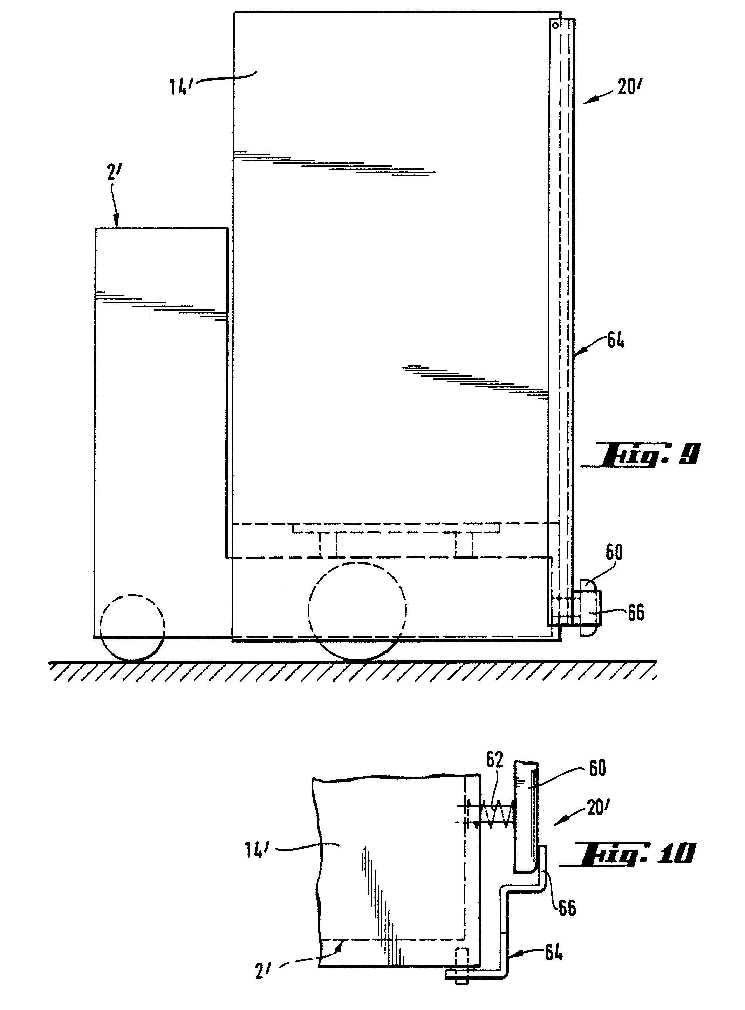

Die in den Figuren 9 und 10 dargestellte Sicherheitseinrichtung 20' unterscheidet sich von der der vorhergehenden Figuren dadurch, daß die Schaltleisten 64 nicht am Fahrzeug verfahrbar, sondern an der Last 14' angebracht sind.

Wie in Figur 10 dargestellt, sind die Schaltleisten 64 an den rückwärtigen Endkanten der Last 14' vorgesehen, um diese Eckkanten bei Rückwärtsfahrt des Transportfahrzeuges 2' abzusichern. Zweckmäßigerweise sind die Schaltleisten 64 an der Last auswechselbar angebracht; insbesondere sollte Vorsorge getragen werden, daß die Schaltleisten auf Vorder- und Rückseite der Last angebracht werden können, damit die Last aus zwei Richtungen auf- und abgeladen werden kann.

Wie in Figur 9 gezeigt, ist das Transportfahrzeug 2' mit einem rückwärtigen Bumper 60 (für Rückwärtsfahrt) versehen, der über Federn 62 elastisch aufgehängt und mit einem Sicherheitsschaltkreis (nicht gezeigt) für einen Schnellstop des Fahrzeuges versehen ist.

Die Schaltleisten sind hierbei so angeordnet und ausgestaltet, daß sie sich selbsttätig mit dem Bumper verbinden bzw. sich an diesen anlegen, wenn das Transportfahrzeug 2' unter die Last gefahren und die Last angehoben wird. Im dargestellten Ausführungsbeispiel ist jede der Schaltleisten 64 mit einem seitlichen Abschnitt 66 versehen, der bei auf der Transportfläche ruhender Last an dem Bumper 60 anliegt.

Wenn somit eine der Schaltleisten 64 bei Rückwärtsfahrt auf ein Hindernis auftrifft, gibt sie ihren Druckimpuls an den Bumper 60 weiter, der daraufhin ein Schaltsignal zum Anhalten des Fahrzeuges auslöst. Bei dieser Ausführungsform ist daher für die Schaltleiste 64 kein zusätzlicher Sicherheitsschaltkreis erforderlich.

**Ansprüche**

1. Sicherheitseinrichtung für ein fahren:loses Transportfahrzeug mit einer offenen Transportfläche zur Aufnahme einer Last, bestehend aus einer Kontakteinrichtung, die bei einer unbeabsichtigten Berührung eines Hindernisses ein Schaltsignal zum Anhalten des Fahrzeuges abgibt, dadurch *gekennzeichnet,* daß die Kontakteinrichtung zur Erzeugung des Schaltsignales mindestens eine elastisch aufgehängte Schaltleiste (22; 64) aufweist, die in einer Lastabsicherungsstellung vertikal verlaufend sich im wesentlichen über die Höhe der Last (14) erstreckt und einer im rückwärtigen Bereich des Transportfahrzeuges (2) liegenden Eckkante (15a, b) der Last (14) zugeordnet ist.

2. Sicherheitseinrichtung nach Anspruch 1, dadurch *gekennzeichnet,* daß zwei Schaltleisten (22; 64) vorgesehen sind, die in der Lastabsicherungsstellung je einer Eckkante (15a, b) der Last (14) im rückwärtigen Bereich des Fahrzeuges (2) zugeordnet sind.

3. Sicherheitseinrichtung nach Anspruch 1 oder 2, dadurch *gekennzeichnet,* daß die bzw. jede Schaltleiste (22) als elektromechanisch arbeitende Schaltleiste ausgebildet ist.

4. Sicherheitseinrichtung nach einem der vorhergehenden Ansprüche, dadurch *gekennzeichnet,* daß die bzw. jede Schaltleiste (22) am Fahrzeug (2) gelagert ist.

5. Sicherheitseinrichtung nach einem der vorhergehenden Ansprüche, dadurch *gekennzeichnet,* daß die bzw. jede Schaltleiste (22) zwischen der Lastabsicherungsstellung und einer zurückgezogenen Stellung im vorderen Bereich des Transportfahrzeuges (2) bewegbar ist, wobei sich die Bewegungsbahn der Schaltleiste (22) seitlich neben der auf der Transportfläche (6) ruhenden Last (14) befindet.

6. Transportfahrzeug nach den Ansprüchen 2 und 5, dadurch *gekennzeichnet,* daß die Schaltleisten (22) parallel zu sich selbst und zueinander verfahrbar sind.

7. Sicherheitseinrichtung nach Anspruch 6, dadurch *gekennzeichnet,* daß jede Schaltleiste (22) bei ihrer Bewegung jeweils in einer oberen und einer unteren Führung (30, 32) geführt ist.

8. Sicherheitseinrichtung nach Anspruch 7, dadurch *gekennzeichnet,* daß die obere und die untere Führung (30, 32) am Fahrzeug (2) angebracht sind.

9. Sicherheitseinrichtung nach Anspruch 7, dadurch *gekennzeichnet,* daß die obere und/oder die untere Führung (30, 32') zumindest teilweise an der Last (14) angebracht ist.

10. Sicherheitseinrichtung nach einem der vorhergehenden Ansprüche in Verbindung mit Anspruch 5, dadurch *gekennzeichnet,* daß zum Bewegen der Schaltleiste bzw. Schaltleisten (22) ein Antrieb (36) in Form eines Motors mit Untersetzungsgetriebe oder eines Linearmotors vorgesehen ist, der über eine Kraftübertragungseinrichtung (34) mit der Schaltleiste bzw. den Schaltleisten (22) verbunden ist.

11. Sicherheitseinrichtung nach Anspruch 10, dadurch *gekennzeichnet,* daß die Kraftübertragungseinrichtung (34; 34') einen Seilzug (50) oder ein Hebelgestänge (38) aufweist.

12. Sicherheitseinrichtung nach Anspruch 1 oder 2, dadurch *gekennzeichnet*, daß die bzw. jede Schaltleiste (64) an der Last (14') angebracht ist.

13. Sicherheitseinrichtung nacht Anspruch 12, bei der die Kontakteinrichtung einen an der Rückseite des Fahrzeuges elastisch aufgehängten Bumper zum Erzeugen des Schaltsignales aufweist, dadurch *gekennzeichnet*, daß dje bzw. jede Schaltleiste (64) einen seitlich abstehenden Abschnitt (66) aufweist, der bei auf der Transportfläche (6) ruhender Last (14') an dem Bumper (60) so anliegt, daß bei Auftreffen der Schaltleiste (64) auf ein Hindernis das Schaltsignal vom Bumper (60) erzeugt wird.

**Fig. 1**

Fig. 2

Fig. 3

# Fig. 4

*Fig. 5*

*Fig. 6*

**Fig. 1**

11

Fig. 8

*Fig. 9*

*Fig. 10*